# EUROPÄISCHE PATENTSCHRIFT

(11) **EP 2 282 879 B1**
(45) Veröffentlichungstag und Bekanntmachung des Hinweises auf die Patenterteilung: **04.09.2013**
(21) Anmeldenummer: 09741759.6
(22) Anmeldetag: 04.05.2009
(51) Int. Cl.: B29B 17/02, B29B 15/12

(54) **ABFALLAUFBEREITUNGSVERFAHREN UND ANORDNUNG DAZU**
WASTE TREATMENT METHOD AND CORRESPONDING ARRANGEMENT
PROCÉDÉ DE TRAITEMENT DE DÉCHETS ET DISPOSITIF CORRESPONDANT

(30) Priorität: 08.05.2008 DE 102008002846
(43) Veröffentlichungstag der Anmeldung: 16.02.2011
(73) Patentinhaber: CFK Valley Stade Recycling GmbH &Co. KG, 21737 Wischhafen (DE)
(72) Erfinder: Meyer, Leif, Ole, 21635 Jork (DE)
(74) Vertreter: Hansen, Jochen
(86) Internationale Anmeldenummer: PCT/DE2009/075019
(87) Internationale Veröffentlichungsnummer: WO 2009/135486

(56) Entgegenhaltungen:
- EP-A- 0 443 051
- DE-C1- 19 514 543
- US-A1- 2007 017 255
- MILLER A; BIBSON A G: "IMPREGNATION TECHNIQUES FOR THERMOPLASTIC MATRIX COMPOSITES" POLYMERS AND POLYMER COMPOSITES, RAPRA TECHNOLOGY, Bd. 4, Nr. 7, 1. Januar 1996 (1996-01-01), Seiten 459-481, XP000658227 ISSN: 0967-3911
- SCHUBERT T; EHRENSTEIN G: "REZYKLIERTES CFK ALS VERSTAERKUNGSSTOFF IN THERMOPLASTEN THERMISCHE ZERSETZUNG DER MATRIX" KUNSTSTOFFE, CARL HANSER VERLAG, MUNCHEN, DE, Bd. 90, Nr. 2, 1. Februar 2000 (2000-02-01), Seiten 78-80,82, XP000936831 ISSN: 0023-5563

## Beschreibung

Die Erfindung betrifft ein Recyclingverfahren zum Recyclen von faserverstärkten und/oder faserhaltigen Halbzeugen und/oder Bauteilen zur späteren Verwendung in der Produktion von faserverstärkten und/oder faserhaltigen Halbzeugen und/oder Bauteilen, wobei die Halbzeuge und/oder Bauteile aus Fasern und einem Matrixwerkstoff bestehen und die Fasern in dem Matrixwerkstoff in Form von Gewebe, unidirektionalem Lagen und/oder Gelegen und/oder einzelnen Verstärkungsfasern und/oder Verstärkungsfaserbündeln angeordnet sind und weiter eine Vorrichtung zur Durchführung des Recyclingverfahrens.

Faserverstärkte Kunststoffbauteile werden seit einigen Jahrzehnten im zivilen und militärischen Flugzeugbau, im Sportbereich, Windenergieerzeugung oder dem Automobilbau als Leichtbaukonstruktionswerkstoff eingesetzt. Der große Vorteil von faserverstärkten Kunststoffen ist ihre hervorragende mechanische Eigenschaft und ihre geringe Dichte. Dies bringt eine deutliche Gewichtseinsparung gegenüber konventionellen Werkstoffen. Insbesondere wird an dieser Stelle auf die Besonderheiten der Kohlenstofffaser verstärkten Kunststoffe (CFK) verwiesen, die derzeit ein ungeahntes Nachfragevolumen haben.

Die ständige Beanspruchung von faserverstärkten Kunststoffen bedingt eine vorhersehbare Verwendungsgrenze dieser Leichtbauteile. Hierbei drängt sich sofort das Problem der geeigneten Wiederverwendung von faserverstärkten Kunststoffen auf. lnbesondere gilt im Automobilbau die Entwicklung von Recyclingverfahren als Notwendigkeit, da aufgrund der Altautoverordnung der Großteil eines Kfz wiederverwendbar sein muss.

Aus dem Stand der Technik sind unterschiedliche Trennverfahren bekannt, um faserverstärkte Kunststoffe zu recyclen. Nachfolgend seien die vier wichtigsten Trennverfahren genannt: Solvolyse; Katalyse, Hydrolyse, Pyrolyse, wobei als aussichtsreichstes Verfahren in großtechnischem Maßstab die Pyrolyse zur Aufspaltung der Kunststoffmatrix bei Temperaturen > 350 °C in kleinere organische Moleküle, welche verdampfen, gilt.

Die mittels eines Recyclingverfahrens zurückgewonnenen Fasern können in den Stoffkreislauf wieder überführt werden, um so in neue Kunststoffe eingearbeitet zu werden.

Die DE 100 26 761 C 1 beschreibt ein Verfahren zur Wiederverwertung von Halbzeugen oder Bauteilen aus Faserverbundwerkstoffen. Hierbei erfolgt ein Trennen der im Matrixwerkstoff gebundenen Fasern in freie Fasern, so dass diese zunächst ohne den Matrixwerkstoff vorliegen. Dabei erfolgt die Trennung durch einen Energieeintrag in den zu recycelten Faserverbundwerkstoff über elektromagnetische Wellen, insbesondere Mikrowellen. Da überlicherweise durch die Matrix eine stärkere Absorption der elektromagnetischen Wellen erfolgt, führt es zu einer selektiven Erwärmung der Matrix, was zur Zersetzung der Matrix und der Trennung von Fasern und Matrix führt. Weiter kann zum Besseren Trennen zusätzlich ein Lösungsmittel eingesetzt werden.

Die DE 41 12 172 A 1 offenbart ein Verfahren zur Herstellung eines wiederaufbereitbaren Faserverbundwerkstoffs aus thermoplastischem Kunststoff. Dieser Entwicklung liegt die Aufgabe zugrunde, einen Faserverbundwerkstoff anzugeben, der nach der Wiederaufbereitung keine Mischung aus unterschiedlichen Bestandteilen, sondern einen sortenreinen Kunststoff bildet, der insbesondere auch als Matrixwerkstoff für die Neubildung eines Faserverbundstoffes Verwendung finden kann. Zur Verwendung als Verstärkungsfaser werden Synthesefasem aus aus einem thermoplastischen Kunststoff, dessen Struktur derjenigen des Matrix-Werkstoffes zumindest sehr ähnlich ist, verwendet. Insbesondere ist es nunmehr möglich den so hergestellten Faserverbundwerkstoff später zu recyclen, da keine unterschiedlichen Materialien vorliegen, sondern vielmehr nur Kunststoffe, nämlich synthetische Faser und Matrixwerkstoff.

Aus der EP 0 636 428 A1 ist ein Verfahren zum Wiederverwerten von kohlenstofffaserhaltigen Verbundwerkstoffen bekannt. Bei dem hier beschriebenen Verfahren werden Teile aus den Kohlenstofffaser verstärkten Verbundwerkstoffen so aufbereitet, dass ein neues Ausgangsmaterial bestehend aus Kohlenstofffasern, die durch eine Kohlenstoffmatrix gebunden sind, entsteht. Dieses Ausgangsmaterial wird zu einem neuen Kohlenstofffaser verstärkten Verbundwerkstoff mit Kohlenstoffmatrix (CFC) mittels eines geeigneten Bindemittels verkokt. Um eine möglichst hohe Kohlenstoffausbeute zu erzielen, wird ein relativ geringer Temperaturgradient und eine lange Verkokungszeit von ca. 1 Woche bei maximalen Temperaturen zwischen 800 und 1200 °C angewendet. In jedem Falle werden mit diesem Verfahren Kohlenstofffaser verstärkte Verbundwerkstoffe auf Kohlenstoffmatrix erstellt, die beispielsweise für Brems- und Reibbeläge, thermische Isolierplatten für Hochtemperaturöfen etc. verwendbar sind.

Aus der Druckschrift EP 0 443 051 A1 ist ein Verfahren und eine Vorrichtung zur Herstellung einer duroplastischen Pressmasse bekannt, die aus einem Glasfaser-Polyester-Verbundwerkstoff besteht. Bei dem Trennvorgang werden die Strukturen von Altteilen durch mechanisches Trennen aufgebrochen und zerkleinert. Die rückgewonnenen, getrennten und von dem Kunststoff befreiten Glasfasern als auch der pulvrige Kunststoff werden separat durch Aufbringen von Schlichten oberflächenbehandelt. Im Anschluss wird ein neues Bauteil durch Beimischen der recycelten Fasern und Kunststoffe hergestellt.

In der Praxis werden derzeit Fasern nach deren Trennung von der Matrix gemahlen, um so in den Stoffkreislauf rücküberführt zu werden, beispielsweise bekannt aus der US 2007/017255 A1. Problematisch hierbei ist die Qualität der recycelten Fasern, die nach einem Pyrolyse- und Mahlprozess nachlässt. Alternativ zu dem Mahlen von Fasern gab es Versuche, die Fasern nach dem Pyrolyseprozess zu entwirren, da diese zuvor in einem Bauteil in Gewebe- und Verstärkungslagen miteinander verwoben waren. Die Aufspaltung solcher Strukturen nach einem Pyrolyseprozess sind derzeit nicht möglich, da sich hierbei Verschlaufungen, sog. Pillings bilden, die sich anschließend kaum wieder aufschließen lassen. So wird die Weiterverarbeitung der zurückgewonnenen Verstärkungsfasern unmöglich.

Der vorliegenden Erfindung liegt die Aufgabe zugrunde, ein Verfahren und eine Anordnung aufzuzeigen, die es ermöglichen, faserverstärkte und/oder faserhaltige Halbzeuge, die während der Produktion von Bauteilen angefallen sind oder aber ein vorgegebenes Verfallsdatum erreicht haben, und/oder faserverstärkte und/oder faserhaltige Bauteile, die beispielsweise am Ende ihres Lebenszykluses stehen, fehlerhaft produziert wurden, oder derart beschädigt sind, dass diese nicht weiter für ihre ursprüngliche Gebrauchsbestimmung verwendet werden können, derart zu recyclen, dass die aus dem Recyclingprozess gewonnenen Fasern in den Produktionszyklus zurückgeführt werden können.

Gelöst wird diese Aufgabe mit einem Verfahren nach Anspruch 1 und einer Anordnung nach Anspruch 9.

Dadurch, dass das eingangs genannte Verfahren die Schritte: Trennen der im Matrixwerkstoff gebundenen Fasern von dem Matrixwerkstoff in freie Fasern und Benetzen der freien Fasern nach dem Trennen mit einem Bindemittel zu benetzten Fasern umfasst, erhält man recycelte Verstärkungsfasern, die in Paketen von benetzten Fasern vorliegen und keine Verschlaufungen, sog. Pillings, aufweisen. Die Fasern haben hierbei die Gewebe- bzw. Lagenstruktur der ursprünglichen faserverstärkten und/oder faserhaltigen Halbzeuge und/oder Bauteile. Diese so gewonnenen recycelten Fasern dienen der weiteren Produktion von faserverstärkten Halbzeugen und/oder Kunststoffbauteilen. Besonders wichtig ist hierbei, dass die freien Fasern nach der Trennung von der Matrix bis zum Benetzen mit einem Bindemittel nicht weiter gehandhabt werden, also nicht bewegt werden.

Wenn vor dem Trennen der Fasern von dem Matrixwerkstoff die faserverstärkten und/oder faserhaltigen Halbzeuge und/oder Bauteile geschnitten werden, wobei die geschnittenen faserverstärkten und/oder faserhaltigen Halbzeuge und/oder Bauteile eine Kantenlänge im Bereich von 6 - 60 mm aufweisen, dann erhält man Faserbündel, die zumindest eine ähnliche Länge aufweisen, so dass diese entsprechend ihrer Länge in einem weiteren Herstellungsprozess von faserverstärkten Kunststoffbauteilen verwendet werden können.

Um Stapelfasern bzw. benetzte Fasern in unidirektionalen Lagenpaketen zur weiteren Verarbeitung zu erhalten, werden die Fasern oder die benetzten Fasern in Längsrichtung zueinander orientiert und ausgerichtet und/oder die Lagen-/Gewebestruktur aufgetrennt. Gleich orientierte Fasern innerhalb einer Stapelfaseranordnung sind im weiteren Verarbeitungsprozess während der Herstellung eines faserverstärkten Kunststoffbauteils leichter zu dosieren und zu handhaben, sowie leichter mittels Computersoftware zu berechnen (Steifigkeit, Festigkeit des Gesamtbauteils).

Zum Benetzen der freien Fasern mit dem Bindemittel können die freien Fasern mit dem Bindemittel besprüht und so zu benetzten Fasern werden. Die freien Fasern können hierbei ohne Relativbewegung zueinander auf der Transporteinrichtung unter dem Sprühstrahl hindurchbewegt werden.

Wenn die von dem Matrixwerkstoff getrennten freien Fasern vor dem Benetzen mit dem Bindemittel unterhalb einer von dem Bindemittel abhängigen maximalen Temperatur abgekühlt werden, wobei die maximale Temperatur der freien Fasern unterhalb der Verdampfungstemperatur des Bindemittels oder weiterer Hilfsstoffe liegt, dann wird die Bindung zwischen den Fasern und dem Bindemittel maximiert. Gleichzeitig wird ein Verdampfen des Bindemittels verhindert.

Zur Maximierung der Unidirektionalität der Verstärkungsfasern werden die Lagen-/Gewebestrukturen der benetzten Fasern zu Faserbündeln aufgetrennt und/oder die benetzten Fasern in Längsrichtung zueinander zu Faserbündeln orientiert und ausgerichtet.

Wenn die Faserbündel senkrecht zur Faserrichtung auf Länge geschnitten werden, erhält man ein lieferfähiges Endprodukt, wobei die Fasern bei unidirektionaler Ausrichtung alle die gleiche Länge aufweisen. Gleichwohl besteht auch die Möglichkeit bei unidirektionalen Halbzeugen, bei denen die Fasern mittels des hier beschriebenen Recyclingverfahrens aus dem Matrixwerkstoff herausgetrennt werden, die freien Fasern nicht zu schneiden, sondern als Endlosfaser weiter zu prozessieren.

Dadurch, dass vor dem Trennen die zu recyclenden faserverstärkten und/oder faserhaltigen Halbzeuge und/oder Bauteile sortiert werden, wobei das Sortieren nach Werkstoffen, Halbzeugen und Bauteilen jeweils nach gleicher Faser, Faserart, insbesondere Gewebe und/oder unidirektionalen Lagen, und/oder Matrixwerkstoff erfolgt, lassen sich unterschiedliche Faserkategorien bündeln, um ein Gemisch von unterschiedlichen Fasern zu verhindern. Ebenfalls können hierdurch Prozessoptimierungen durchgeführt werden, da beispielsweise bei einem bei geringeren Temperaturen trennbaren Kunststoff die Temperaturen während der Trennung geringer gehalten werden können und so recourcenschonend verfahren wird. Ebenfalls würde bei einer Vorsortierung nach Gewebe und entsprechend unidirektionalen Faserlagen eine Optimierung des späteren Ausrichtens vollzogen werden.

Wenn zur Trennung der Fasern von dem Matrixwerkstoff die faserverstärkten und/oder faserhaltigen Halbzeuge und/oder Bauteile einen Pyrolyse-Prozess durchlaufen, lässt sich so ein kontinuierlicher Ofenprozess realisieren, indem beispielsweise auch rund um die Uhr faserverstärkte und/oder faserhaltige Halbzeuge und/oder Bauteile recycelt werden können. Gleichwohl können aber auch zur Pyrolyse ähnliche Verfahren verwendet werden, hier sei beispielsweise die chemische Trennung von Matrixwerkstoff und Faser genannt. Hierbei ist ein diskontinuierlicher, als auch ein kontinuierlicher Prozess durchführbar.

Wenn nach Benetzen der freien Fasern mit dem Bindemittel die benetzten Fasern getrocknet werden, dann lassen sich rieselfähige Stapelfasern generieren, die zur späteren Herstellung von neuen Teilen verwendet werden können. Eine Verklumpung wird durch die sofortige Trocknung ausgeschlossen.

Zur Vermeidung von Pillings reicht eine ausreichende Benetzung der Fasern mit einem Bindemittelgehalt von 3 Gew.-% aus. Zur weiteren Verwendung ist ein Bindemittelgehalt zwischen 3 und 30 Gew.-% jedoch optimal, da so eine ausreichende Kunststoffdichte im späteren Produkt erzielt werden kann.

Eine Vorrichtung zur Durchführung des Recyclingverfahrens weist bevorzugt eine Transporteinrichtung, die die zu recyclenden Fasern in Prozessrichtung transportieren, eine Trennanordnung zur Trennung von Fasern und Matrix-werkstoffen und eine in Prozessrichtung nachfolgende Benetzungsanordnung auf.

Damit die freien Fasern entsprechend kostengünstig mit dem Bindemittel benetzt werden, ist es vorteilhaft, wenn die Transporteinrichtung derart ausgestaltet ist, dass sich diese mit einer variablen Geschwindigkeit bewegen kann. Hierdurch lässt sich ein individueller Grad der Benetzung einstellen. Der individuelle Grad der Benetzung kann ebenso durch die Variation des Bindemittelgehalts eingestellt werden. Hierzu kann die Menge des in der aufgesprühten Bindemittellösung vorhandenen Lösungsmittels variiert werden. Alternativ kann die pro Zeiteinheit versprühte Menge an Bindemittellösung variiert werden.

Das Bindemittel, welches durch Sprühen auf die Fasern gelangt kann bei entsprechender Ausgestaltung der Transporteinrichtung einfach durch diese hindurchdringen oder aber auch bei entsprechender Ausgestaltung der Transporteinrichtung in dieser verweilen um größere Kunststoffmengen den Fasern beizugeben.

Dadurch, dass zum unmittelbaren Benetzen der freien Fasern mit dem Bindemittel eine Sprühanordnung nach der Trennanordnung vorgesehen ist, lässt sich das Bindemittel von oben auf die freien Fasern aufsprühen. Hierbei ist eine Dosierung der aufgebrachten Bindemittelmenge möglich.

Wenn eine Aufschluss- und/oder Kämmvorrichtung nach der Benetzungsvorrichtung vorgesehen ist, dann lassen sich nicht parallel liegende unidirektionale Fasern in eine Richtung ausrichten/orientieren und Gewebe auflösen.

Wenn die Aufschluss- und/oder Kämmvorrichtung in Prozessrichtung aus parallel zueinander orientiert angeordneten spitzen Schneidkeilen gebildet ist, wobei die Spitzen der Schneidkeile entgegen der Prozessrichtung zeigen, lassen sich die mehr oder weniger vereinzelt vorliegenden Fasern zu Faserbündeln zusammenführen.

Dadurch, dass die Aufschluss- und/oder Kämmvorrichtung aus mindestens zwei Einzelkämmen besteht, die insbesondere senkrecht zur Prozessrichtung das Gewebe gegenläufig auseinanderkämmen, können Gewebe aufgetrennt werden und so weiter zu Stapelfasern verarbeitet werden.

Wenn die Trennanordnung zur Trennung der Fasern von dem Matrixwerkstoff durch Pyrolyse mit Hilfe einer kontinuierlich arbeitenden Ofenanordnung erfolgt, wobei die freien Fasern auf der Transporteinrichtung relativ zu dieser keine Bewegung und/oder Lageänderung während des Pyrolyseprozesses erfahren, lassen sich die Fasern kontinuierlich verarbeiten.

Dadurch, dass die Transporteinrichtung ein hitzebeständiges Förderband hat, kann eine kontinuierliche Bewegung der Fasern durch die Gesamtanordnung ohne Relativbewegung zueinander realisiert werden. Dabei ermöglicht die Verwendung eines hitzebeständigen Förderbandes die Förderung durch die Trennanordnung. Weiterhin kann das Förderband derart ausgestaltet sein, dass überschüssiges Bindemittel während oder nach dem Benetzungsprozess das Förderband durchdringt und darunter zur Weiterverwendung aufgefangen wird.

Wenn das Bindemittel aus einem Lösungsmittel, vorzugsweise einem organischen Lösungsmittel und einem in dem Lösungsmittel gelösten technischen Kunststoff, vorzugsweise einem Polymer besteht, lässt sich das Bindemittel leicht dosieren, verarbeiten und wieder auffangen.

Wenn eine Trocknungsanordnung zum Trocknen der benetzten Fasern nach der Benetzungsanordnung vorgesehen ist, lässt sich eine kürzere Prozessstrecke realisieren, da ansonsten eine längere Trocknungsphase der benetzten Fasern nötig wäre, um das Zusammenkleben von einzelnen Stapelfaserpaketen zu verhindern.

Dadurch, dass die Trocknungsanordnung aus einem Wärmestrahler und/oder einem Warmluftgebläse besteht, kann so eine kostengünstige Trockungsanordnung realisiert werden. Beispielsweise wäre auch eine Kombination aus der Trockungsanordnung und der Trennanordnung denkbar, an der die Prozesswärme der Trennanordnung für die Trockungsanordnung genutzt wird.

Nachfolgend wird ein Ausführungsbeispiel der Erfindung anhand der beiliegenden Zeichnung detailliert beschrieben.

Darin zeigt:

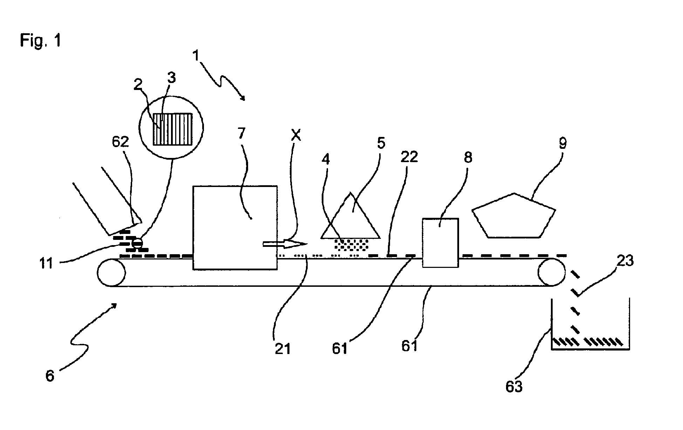

- Fig. 1: eine schematische Darstellung der Recyclinganordnung.

In Fig. 1 ist eine schematische Darstellung eines Ausführungsbeispiels der Recyclinganordnung 1 dargestellt. Die Recyclinganordnung 1 besteht aus einer Transporteinrichtung 6, hier ein Förderband 61. Das Förderband 61 dient dazu, die mittels einer Zuführungsvorrichtung 62 zugeführten faserverstärkten und/oder faserhaltigen Halbzeuge und/oder Bauteile 11 innerhalb der Recyclinganordnung 1 zu transportieren und so von einer Prozessstation zur nächsten zu führen.

Nachdem die faserverstärkten und/oder faserhaltigen Halbzeuge und/oder Bauteile 11 dem Förderband 61 zugeführt worden sind, bewegt das Förderband diese zu einer Trennanordnung 7. Innerhalb dieser Trennanordnung 7, die beispielsweise eine Ofenanordnung sein kann, werden die faserverstärkten und/oder faserhaltigen Halbzeuge und/oder Bauteile 11, die aus einer Faser 2 und einem Matrixwerkstoff 3 bestehen derart getrennt, so dass eine freie Faser 21 überbleibt. Die freien Fasern 21 liegen wie ursprünglich innerhalb des faserverstärkten und/oder faserhaltigen Halbzeugs und/oder Bauteils vor, wobei genauer gesagt deren Gewebestruktur und/oder Lagenausrichtung unverändert ist.

Nachdem die freien Fasern 21 die Trennanordnung 7 auf dem Förderband 61 verlassen haben, werden diese der Benetzungsanordnung 5 zugeführt. Die Benetzungsanordnung 5 kann hierbei beispielsweise als Sprühanordnung, wie hier dargestellt, ausgestaltet sein. Kurz bevor die freien Fasern 21 mit einem Bindemittel 4, welches aus einem Lösungsmittel und einem technischen Kunststoff besteht mittels der Benetzungsanordnung 5 auf die freien Fasern aufgetragen wird, müssen diese unterhalb einer maximalen Temperatur liegen, die abhängig ist von der Verdampfungstemperatur des Bindemittels. In diesem Schritt wird aus der freien Faser 21 eine benetzte Faser 22. Die Faser ist nunmehr mit einem technischen Kunststoff umhüllt, der beispielsweise ein Polymer sein kann. Die Ausgestaltung des technischen Kunststoffs richtet sich nach der späteren Verwendung der nunmehr kunststoffumhüllten Faser.

Mittels der Transporteinrichtung 6 werden die benetzten Fasern 22 durch eine Aufschluss- und/oder Kämmvorrichtung 8 mit Schneidkeilen und Kämmen hindurchgeführt, die dafür sorgt, dass die Gewebestruktur und/oder die vereinzelten Fasern entsprechend orientiert bzw. aufgelöst werden, so dass nach dem Durchqueren der Aufschluss- und/der Kämmvorrichtung 8 die mit dem Bindemittel 4 benetzten Fasern 22 orientiert in kleinen Stapeln vorliegen. Nunmehr erfolgt der Weitertransport zur Trocknungsanordnung 9, die beispielsweise durch einen Wärmestrahler oder ein Warmluftgebläse realisiert ist. Hier werden die Faserbündel 23, die sich aus den benetzten Fasern 22 mittels des Bindemittels 4 gebildet haben getrocknet. Hierbei entsteht ein rieselfähiges Produkt, welches in einem Sammelbehälter 63 am Ende der Förderstrecke der Transporteinrichtung 6 aufgefangen wird. Die Prozessrichtung des hier dargestellten Verfahrens ist durch den Pfeil X dargestellt.

### Bezugszeichenliste

- 1: Recyclinganordnung
- 11: faserverstärktes und/oder faserhaltiges Halbzeug und/oder Bauteil
- 12: geschnittenes faserverstärktes und/oder faserhaltiges Halbzeug und/oder Bauteil
- 2: Faser
- 21: freie Faser
- 22: benetzte Faser
- 23: Faserbündel
- 3: Matrixwerkstoff
- 4: Bindemittel
- 5: Benetzungsanordnung
- 6: Transporteinrichtung
- 61: Förderband
- 62: Zuführungsvorrichtung
- 63: Sammelbehälter
- 7: Trennanordnung
- 8: Aufschluss- und/oder Kämmvorrichtung
- 9: Trocknungsanordnung
- X: Prozessrichtung

## Patentansprüche

1. Recyclingverfahren zum Recyclen von faserverstärkten und/oder faserhaltigen Halbzeugen und/oder Bauteilen (11) zur späteren Verwendung in der Produktion von faserverstärkten und/oder faserhaltigen Halbzeugen und/oder Bauteilen, wobei die Halbzeuge und/oder Bauteile (11) aus Fasern (2) und einem Matrixwerkstoff (3) bestehen und die Fasern (2) in dem Matrixwerkstoff (3) in Form von Gewebe, unidirektionalem Lagen und/oder Gelegen und/oder einzelnen Verstärkungsfasern und/oder Verstärkungsfaserbündeln angeordnet sind, umfassend das Trennen der im Matrixwerkstoff (3) gebundenen Fasern (2) von dem Matrixwerkstoff (3) in freie Fasern (21), **dadurch gekennzeichnet, dass** unmittelbar nach dem Trennen und ohne ein Bewegen der Fasern relativ zueinander ein Benetzen der freien Fasern (21) mit einem Bindemittel (4) zu benetzten Fasern (22) erfolgt.

2. Recyclingverfahren nach Anspruch 1, **dadurch gekennzeichnet, dass** vor dem Trennen der Fasern (2) von dem Matrixwerkstoff (3) die faserverstärkten und/oder faserhaltigen Halbzeuge und/oder Bauteile (11) geschnitten werden, wobei die geschnittenen faserverstärkten und/oder faserhaltigen Halbzeuge und/oder Bauteile (12) eine Kantenlänge im Bereich von 6 - 60 mm aufweisen.

3. Recyclingverfahren nach Anspruch 1 oder 2, **dadurch gekennzeichnet, dass** die Fasern (2) oder die benetzten Fasern (22) in Längsrichtung zueinander orientiert und ausgerichtet werden und/oder die Lagen-/Gewebestruktur aufgetrennt wird.

4. Recyclingverfahren nach Anspruch 1, 2 oder 3, **dadurch gekennzeichnet, dass** zum Benetzen der freien Fasern (21) mit dem Bindemittel (4) die freien Fasern (21) mit dem Bindemittel (4) besprüht und so zu benetzten Fasern (22) werden.

5. Recyclingverfahren nach einem der Ansprüche 1 bis 4, **dadurch gekennzeichnet, dass** die von dem Matrixwerkstoff (3) getrennten freien Fasern (21) vor dem Benetzen mit dem Bindemittel (4) unterhalb einer von dem Bindemittel (4) abhängigen maximalen Temperatur abgekühlt werden, wobei die maximale Temperatur der freien Fasern (21) unterhalb der Verdampfungstemperatur des Bindemittels (4) liegt.

6. Recyclingverfahren nach einem der Ansprüche 1 bis 5, **dadurch gekennzeichnet, dass** die Lagen-/Gewebestruktur der benetzten Fasern (22) zu Faserbündeln (23) aufgetrennt wird und/oder die benetzten Fasern (22) in Längsrichtung zueinander zu Faserbündeln (23) orientiert und ausgerichtet werden.

7. Recyclingverfahren nach einem der Ansprüche 1 bis 6, **dadurch gekennzeichnet, dass** zur Trennung der Fasern (2) von dem Matrixwerkstoff (3) die faserverstärkten und/oder faserhaltigen Halbzeuge und/oder Bauteile (11) einen Pyrolyse-Prozess durchlaufen.

8. Recyclingverfahren nach einem der Ansprüche 1 bis 7, **dadurch gekennzeichnet, dass** der Bindemittelgehalt zwischen 3 und 30 Gewichtsprozent der mit Bindemittel (4) benetzten Fasern (22) liegt.

9. Recyclinganordnung zur Durchführung des Recyclingverfahrens nach den Ansprüchen 1 bis 8, mit
- einer Transporteinrichtung (6), die die zu recyclenden Fasern (2) in Prozessrichtung (X) transportieren und
- einer Trennanordnung (7) zur Trennung von Fasern (2) und Matrixwerkstoffen (3),
**dadurch gekennzeichnet, dass** unmittelbar nach der Trennanordnung (7) eine in Prozessrichtung (X) nachfolgende Benetzungsanordnung (5) vorgesehen ist, so daß unmittelbar nach dem Trennen und ohne ein Bewegen der Fasern relativ zu einander ein Benetzen der freien Fasern (21) mit einem Bindemittel (4) zu benetzten Fasern (22) erfolgen kann.

10. Recyclinganordnung nach Anspruch 9, **dadurch gekennzeichnet, dass** zum unmittelbaren Benetzen der freien Fasern (21) eine Sprühanordnung nach der Trennanordnung (7), wodurch diese zu benetzten Fasern werden, angeordnet ist.

11. Recydinganordnung nach einem der Ansprüche 9 oder 10, **dadurch gekennzeichnet, dass** eine Aufschluss- und/oder Kämmvorrichtung (8) nach der Benetzungsvorrichtung (5) vorgesehen ist.

12. Recyclinganordnung nach Anspruch 11, **dadurch gekennzeichnet, dass** die Aufschluss- und/oder Kämmvorrichtung (8) in Prozessrichtung (X) aus parallel zueinander orientiert angeordneten spitzen Schneidkeilen gebildet ist, wobei die Spitzen der Schneidkeile entgegen der Prozessrichtung (X) zeigen.

13. Recyclinganordnung nach einem der Ansprüche 9 bis 12, **dadurch gekennzeichnet, dass** die Aufschluss- und/oder Kämmvorrichtung (8) aus mindestens zwei Einzelkämmen besteht, die insbesondere senkrecht zur Prozessrichtung (X) das Gewebe gegenläufig auseinanderkämmen.

14. Recyclinganordnung nach einem der Ansprüche 9 bis 13, **dadurch gekennzeichnet, dass** die Trennanordnung (7) zur Trennung der Fasern (2) von dem Matrixwerkstoff (3) durch Pyrolyse mit Hilfe einer kontinuierlich arbeitenden Ofenanordnung erfolgt, wobei die freien Fasern (21) auf der Transporteinrichtung (6) relativ zu dieser keine Bewegung und/oder Lageänderung während des Pyrolyseprozesses erfahren.

15. Recyclinganordnung nach einem der Ansprüche 9 bis 14, **dadurch gekennzeichnet, dass** das Bindemittel (4) aus einem Lösungsmittel, vorzugsweise einem organischen Lösungsmittel und einem in dem Lösungsmittel gelösten technischen Kunststoff, vorzugsweise einem Polymer besteht.

## Claims

1. A recycling method for recycling fibre-reinforced and/or fibre-containing semi-finished products and/or components (11) for later use in the production of fibre-reinforced and/or fibre-containing semi-finished products and/or components, the semi-finished products and/or components (11) consisting of fibres (2) and a matrix material (3) and the fibres (2) being arranged in the matrix material (3) in the form of woven fabric, unidirectional layers and/or laid fabrics and/or individual reinforcing fibres and/or reinforcing-fibre bundles, comprising the separation of the fibres (2) which are bound in the matrix material (3) from the matrix material (3) into free fibres (21), **characterised in that** wetting of the free fibres (21) with a binder (4) to form wetted fibres (22) takes place directly after the separation and without movement of the fibres relative to each other.

2. A recycling method according to Claim 1, **characterised in that** before the separation of the fibres (2) from the matrix material (3) the fibre-reinforced and/or fibre-containing semi-finished products and/or components (11) are cut, the cut fibre-reinforced and/or fibre-containing semi-finished products and/or components (12) having an edge length in the range from 6 - 60 mm.

3. A recycling method according to Claim 1 or 2, **characterised in that** the fibres (2) or the wetted fibres (22) are oriented and aligned in the longitudinal direction relative to each other and/or the layered/woven-fabric structure is unravelled.

4. A recycling method according to Claim 1, 2 or 3, **characterised in that** to wet the free fibres (21) with the binder (4), the free fibres (21) are sprayed with the binder (4) and thus become wetted fibres (22).

5. A recycling method according to one of Claims 1 to 4, **characterised in that** the free fibres (21) separated from the matrix material (3), before the wetting with the binder (4), are cooled to below a maximum temperature which is dependent on the binder (4), the maximum temperature of the free fibres (21) being below the boiling temperature of the binder (4).

6. A recycling method according to one of Claims 1 to 5, **characterised in that** the layered/woven-fabric structure of the wetted fibres (22) is unravelled into fibre bundles (23) and/or the wetted fibres (22) are oriented and aligned in the longitudinal direction relative to each other to form fibre bundles (23).

7. A recycling method according to one of Claims 1 to 6, **characterised in that** the fibre-reinforced and/or fibre-containing semi-finished products and/or components (11) undergo a pyrolysis process to separate the fibres (2) from the matrix material (3).

8. A recycling method according to one of Claims 1 to 7, **characterised in that** the binder content is between 3 and 30 percent by weight of the fibres (22) wetted with binder (4).

9. A recycling arrangement for carrying out the recycling method according to Claims 1 to 8, with
- a transport means (6) which transport [sic] the fibres (2) to be recycled in the process direction (X), and
- a separating arrangement (7) for separating fibres (2) and matrix materials (3), **characterised in that** directly after the separating arrangement (7) a wetting arrangement (5) which succeeds it in the process direction (X) is provided, so that wetting of the free fibres (21) with a binder (4) to form wetted fibres (22) can take place directly after the separation and without movement of the fibres relative to each other.

10. A recycling arrangement according to Claim 9, **characterised in that** for direct wetting of the free fibres (21) a spraying arrangement is arranged after the separating arrangement (7), as a result of which said fibres become wetted fibres.

11. A recycling arrangement according to one of Claims 9 or 10, **characterised in that** a dissociation and/or combing device (8) is provided after the wetting device (5).

12. A recycling arrangement according to Claim 11, **characterised in that** the dissociation and/or combing device (8) in the process direction (X) is formed from sharp cutting wedges arranged oriented parallel to each other, the tips of the cutting wedges pointing counter to the process direction (X).

13. A recycling arrangement according to one of Claims 9 to 12, **characterised in that** the dissociation and/or combing device (8) consists of at least two individual combs which in particular perpendicularly to the process direction (X) comb the woven fabric apart in opposite directions.

14. A recycling arrangement according to one of Claims 9 to 13, **characterised in that** the separating arrangement (7) for separating the fibres (2) from the matrix material (3) by pyrolysis takes place with the aid of a continuously-operating furnace arrangement, the free fibres (21) on the transport means (6) not undergoing any movement and/or change in position relative thereto during the pyrolysis process.

15. A recycling arrangement according to one of Claims 9 to 14, **characterised in that** the binder (4) consists of a solvent, preferably an organic solvent, and an industrial plastics material, preferably a polymer, dissolved in the solvent.

## Revendications

1. Procédé de recyclage de produits semi-finis et/ou de composants (11) renforcés par des fibres et/ou contenant des fibres, en vue de leur utilisation ultérieure dans la fabrication de produits semi-finis et/ou de composants renforcés par des fibres et/ou contenant des fibres, les produits semi-finis et/ou les composants (11) étant composés de fibres (2) et d'un matériau de matrice (3), et les fibres (2) étant disposées dans le matériau de matrice (3) sous forme de tissus, de structures et/ou de couches unidirectionnelles, et/ou de fibres de renfort individuelles et/ou de faisceaux de fibres de renfort, ledit procédé consistant à séparer du matériau de matrice (3) les fibres (2) liées dans le matériau de matrice (3) pour obtenir des fibres libres (21), **caractérisé en ce qu'**une humectation des fibres libres (21) au moyen d'un liant (4) afin d'obtenir des fibres humectées (22) est effectuée immédiatement après la séparation et sans que les fibres ne soient déplacées les unes par rapport aux autres.

2. Procédé de recyclage selon la revendication 1, **caractérisé en ce que** les produits semi-finis et/ou composants (11) renforcés par des fibres et/ou contenant des fibres sont découpés avant la séparation des fibres (2) du matériau de matrice (3), les produits semi-finis et/ou composants (11) renforcés par des fibres et/ou contenant des fibres présentant, une fois découpés, une longueur de côté située dans la plage de 6 à 60 mm.

3. Procédé de recyclage selon la revendication 1 ou 2, **caractérisé en ce que** les fibres (2) ou les fibres humectées (22) sont orientées et alignées les unes par rapport aux autres dans le sens de la longueur et/ou la structure sous forme de couches/de tissus est défaite.

4. Procédé de recyclage selon la revendication 1, 2 ou 3, **caractérisé en ce que** pour humecter les fibres libres (21) au moyen du liant (4), les fibres libres (21) sont pulvérisées avec le liant (4) et deviennent ainsi des fibres humectées (22).

5. Procédé de recyclage selon l'une des revendications 1 à 4, **caractérisé en ce que** les fibres libres (21) séparées du matériau de matrice (3), avant d'être humectées au moyen du liant (4), sont refroidies en dessous d'une température maximale dépendante du liant (4), la température maximale des fibres libres (21) étant inférieure à la température de vaporisation du liant (4).

6. Procédé de recyclage selon l'une des revendications 1 à 5, **caractérisé en ce que** la structure sous forme de couches/de tissus des fibres humectées (22) est défaite pour obtenir des faisceaux de fibres (23) et/ou les fibres humectées (22) sont orientées et alignées dans le sens de la longueur les unes par rapport aux autres pour obtenir des faisceaux de fibres (23).

7. Procédé de recyclage selon l'une des revendications 1 à 6, **caractérisé en ce que** pour séparer les fibres (2) du matériau de matrice (3), les produits semi-finis et/ou composants (11) renforcés par des fibres et/ou contenant des fibres sont soumis à un processus de pyrolyse.

8. Procédé de recyclage selon l'une des revendications 1 à 7, **caractérisé en ce que** la teneur en liant est comprise entre 3 et 30 pour cent en poids des fibres (22) humectées par le liant (4).

9. Dispositif de recyclage pour la mise en oeuvre du procédé de recyclage selon l'une des revendications 1 à 8, comprenant
- un dispositif de transport (6) transportant les fibres (2) à recycler dans un sens de traitement (X) et
- un dispositif de séparation (7) pour séparer les fibres (2) et les matériaux de matrices (3),
**caractérisé en ce qu'**un dispositif d'humectation (5) situé en aval dans le sens de traitement (X) est prévu immédiatement après le dispositif de séparation (7), de sorte qu'une humectation des fibres libres (21) au moyen d'un liant (4), afin de former des fibres humectées (22), peut être effectuée immédiatement après la séparation et sans que les fibres ne se soient déplacées les unes par rapport aux autres.

10. Dispositif de recyclage selon la revendication 9, **caractérisé en ce qu'**un dispositif de pulvérisation pour humecter directement les fibres libres (21) est disposé après le dispositif de séparation (7), lesdites fibres libres devenant ainsi des fibres humectées.

11. Dispositif de recyclage selon l'une des revendications 9 ou 10, **caractérisé en ce qu'**un dispositif de désagrégation et/ou de peignage (8) est prévu après le dispositif d'humectation (5).

12. Dispositif de recyclage selon la revendication 11, **caractérisé en ce que** le dispositif de désagrégation et/ou de peignage (8), dans le sens de traitement (X), est composé d'angles de coupe pointus orientés parallèlement les uns aux autres, les pointes des angles de coupe étant orientées à l'encontre du sens de traitement (X).

13. Dispositif de recyclage selon l'une des revendications 9 à 12, **caractérisé en ce que** le dispositif de désagrégation et/ou de peignage (8) est constitué d'au moins deux peignes individuels qui séparent le tissu par peignage dans des directions contraires, en particulier perpendiculairement au sens de traitement (X).

14. Dispositif de recyclage selon l'une des revendications 9 à 13, **caractérisé en ce que** le dispositif de séparation (7) pour la séparation des fibres (2) du matériau de matrice (3) au moyen d'une pyrolyse comprend un dispositif de four fonctionnant en continu, les fibres libres (21) ne subissant sur le dispositif de transport (6) aucun déplacement et/ou aucune modification de la position par rapport audit dispositif durant le processus de pyrolyse.

15. Dispositif de recyclage selon l'une des revendications 9 à 14, **caractérisé en ce que** le liant (14) est constitué d'un solvant, de préférence d'un solvant organique, et d'une matière plastique technique dissoute dans le solvant, de préférence d'un polymère.
